# EUROPEAN PATENT SPECIFICATION

(11) **EP 2 442 014 B1**
(45) Date of publication and mention of the grant of the patent: **08.07.2015**
(21) Application number: 11184910.5
(22) Date of filing: 12.10.2011
(51) Int. Cl.: F21S 8/08, F21V 23/04, F21S 9/03, H05B 37/02, H05B 37/00

(54) **Illumination device**
Beleuchtungsvorrichtung
Dispositif d'illumination

(30) Priority: 13.10.2010 JP 2010230875
(43) Date of publication of application: 18.04.2012
(73) Proprietor: Panasonic Intellectual Property Management Co., Ltd., Osaka 540-6207 (JP)
(72) Inventor: Tanigawa, Tetsuya, Kobe, Hyogo (JP); Nagazoe, Kazufumi, Sakai, Osaka (JP)
(74) Representative: Rüger, Barthelt & Abel

(56) References cited:
- WO-A1-2009/097400
- WO-A2-2010/057138

## Description

### [Field of the Invention]

The present invention relates to an illumination device.

### [Background Art]

Conventionally, an illumination device such as a street light using the solar power generation has been provided (for example, refer to Patent Literature 1). This type of illumination device includes a solar cell and a battery, and charges the battery with the electric power generated by the solar cell. Then, a light source is lighted using the electric power in the charged battery as a power source. In addition, the illumination device includes a human-sensing device for detecting existence and non-existence of human, and in the case where the existence of human has been detected, the light source is lighted at a predetermined dimming rate during a predetermined lighting retention time.

### [Conventional Technique Document]

### [Patent Literature]

[Patent Literature 1] JPA 2006-236584

### [Disclosure of the Invention]

### [Problems to be solved by the Invention]

A power generation amount due to the solar cell, that is, the electric power in the charged battery varies depending on the season. In the summer, the power generation amount becomes large due to the long daytime; however, in the winter, the power generation amount becomes smaller than that of the summer due to the short daytime. In addition, since the nighttime is long in the winter, the light source is required to be lighted for a long time. For this reason, in the winter, the electric power to light the light source has been at risk of shortage.

WO 2010/057138 A2 shows an illumination device comprising: a solar generation part for generating electric power by receiving sunlight; a battery for storing the electric power generated by the solar generation part; a light source for being lighted with use of the battery as a power source;a human-sensing device for detecting a human; a human judgment part for judging existence and non-existence of the human on the basis of the detection result of the human-sensing device; and a lighting control part for lighting the light source at a predetermined dimming rate during a predetermined lighting retention time in the case where the human judgment part judges the existence of the human.

The present invention is achieved in consideration of the above-mentioned reasons, and the purpose is to provide an illumination device able to control a power consumption amount of the light source in accordance with the season.

### [Means adapted to solve the Problems]

An illumination device of the present invention includes: a solar generation part for generating electric power by receiving sunlight; a battery for storing the electric power generated by the solar generation part; a light source for being lighted with use of the battery as a power source; a human-sensing device for detecting a human; a human judgment part for judging existence and non-existence of the human on the basis of the detection result of the human-sensing device; a season judgment part for judging a present season; and a lighting control part for lighting the light source at a predetermined dimming rate during a predetermined lighting retention time in the case where the human judgment part judges the existence of the human, wherein the lighting control part reduces a power consumption amount of the light source in the season of a short daytime to be smaller than a power consumption amount of the light source in the season of a long daytime judged by the season judgment part on the basis of the season judged by the season judgment part.

In the illumination device, it is preferred that the lighting control part shortens the lighting retention time in the season of a short daytime to be shorter than the lighting retention time in the season of a long daytime judged by the season judgment part on the basis of the season judged by the season judgment part.

In the illumination device, it is preferred that the lighting control part reduces the dimming rate in the season of a short daytime to be shorter than the dimming rate in the season of a long daytime judged by the season judgment part on the basis of the season judged by the season judgment part.

In the illumination device, it is preferred that the human-sensing device includes a pyroelectric infrared ray detection element, and the human judgment part judges that the human exists in the case where the human-sensing device detects the human during a predetermined judgment time, and shortens the judgment time in the season of the long daytime to be shorter than the judgment time in the season of the short daytime judged by the season judgment part on the basis of the season judged by the season judgment part.

In the illumination device, it is preferred that a power generation amount detection part for detecting a power generation amount due to the solar generation part is included and that the season judgment part judges the season on the basis of a detection result of the power generation amount detection part.

In the illumination device, it is preferred that a clock part having a time counting function is included and that the season judgment part judges the season on the basis of a time counting result of the clock part.

In the illumination device, it is preferred that an intensity sensor for detecting an illumination intensity of the outdoors is included and that the season judgment part counts an accumulated time when an illumination intensity detected by the intensity sensor in a predetermined period is a predetermined threshold or more, and judges the season on the basis of the accumulated time.

### [Effect of the Invention]

As explained above, in the present invention, there is an effect that a power consumption amount of a light source can be controlled in accordance with the season.

### [Brief Description of the Drawings]

[Fig. 1] Fig. 1 is a block configuration diagram of an illumination device according to an embodiment of the present invention.
[Fig. 2] Fig. 2 is a block configuration diagram of a power generation amount detection part according to the above-mentioned embodiment.
[Fig. 3] Fig. 3 is a block configuration diagram of the power generation amount detection part according to the above-mentioned embodiment.
[Fig. 4] Fig. 4 is a graph showing a power generation amount according to the above-mentioned embodiment.
[Fig. 5] Fig. 5 is a waveform chart of a human body detection signal according to the above-mentioned embodiment.
[Fig. 6] Fig. 6 is a waveform chart of the human body detection signal according to the above-mentioned embodiment.
[Fig. 7] Fig. 7 is a graph showing a dimming rate of a light source according to the above-mentioned embodiment.
[Fig. 8] Fig. 8 is a graph showing a dimming rate of the light source according to the above-mentioned embodiment.
[Fig. 9] Fig. 9 is a block configuration diagram of the illumination device according to the above-mentioned embodiment.
[Fig. 10] Fig. 10 is a block configuration diagram of the illumination device according to the above-mentioned embodiment.
[Fig. 11] Fig. 11 is a schematic external view of the illumination device according to the above-mentioned embodiment.

### [Best Mode for Carrying Out the Invention]

On the basis of drawings, an embodiment of the present invention will be explained below.

### (Embodiment)

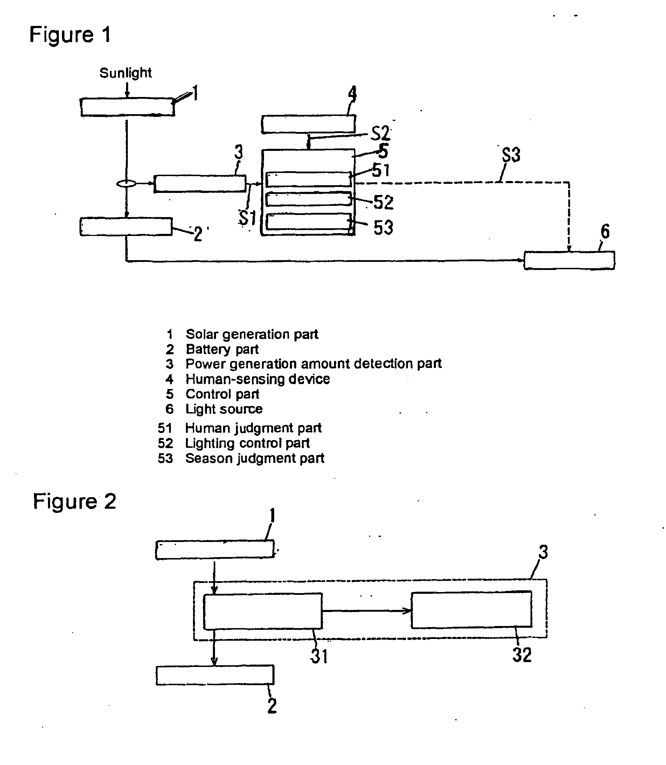

A block configuration diagram of an illumination device according to the present embodiment is shown in Fig. 1. The illumination device according to the embodiment includes: a solar generation part 1, a battery part 2, a power generation amount detection part 3, a human-sensing device 4, a control part 5, and a light source 6.

Configurations of the respective components will be explained below.

The solar generation part 1 includes a solar cell, and generates electric power by receiving the sunlight. Then, the solar generation part 1 supplies the generated power to the battery part 2, and thereby the battery part 2 is charged.

The power generation amount detection part 3 detects a power generation amount of the solar generation part 1, and outputs a detection result to the control part 5. As shown in Fig. 2, the power generation amount detection part 3 includes: a current transformer 31 and a microcomputer 32.

The current transformer 31 detects a current flowing to an electric path connecting between the solar generation part 1 and the battery 2, and outputs the detection result to the microcomputer 32. The microcomputer 32 has a function as an A/D converting part, and converts the detection result outputted in an analog value from the current transformer 31 into a digital signal. According to the above-mentioned configuration, the power generation amount detection part 3 detects the power generation amount of the solar generation part 1 by detecting an output current of the solar generation part 1, generates a power generation amount detection signal S1 of a digital signal, and transmits the power generation amount detection signal S1 to the control part 5.

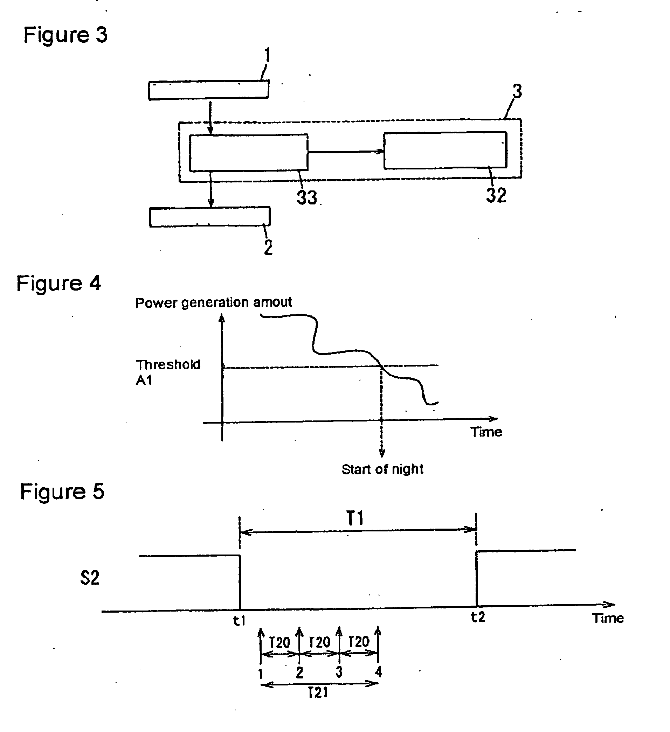

Meanwhile, as shown in Fig. 3, a current detection resistor 33 may be used instead of the current transformer 31. The current detection resistor 33 is connected in series to the electric path connecting between the solar generation part 1 and the battery 2. Then, the microcomputer 32 detects a voltage between both ends of the current detection resistor 33, generates the power generation amount detection signal S1 through the A/D conversion of the detected voltage, and transmits the generated signal to the control part 5.

The human-sensing device 4 includes a pyroelectric infrared ray detection element (an infrared pyroelectric? element). The human-sensing device 4 detects the infrared ray (heat) emitted from a human in a predetermined detection area, that is, a temperature difference between the human and a background of the human, and thus detects the human due to the detection of the temperature difference. Then, the human-sensing device 4 generates a human body detection signal S2 indicating detection or non-detection of the human in a detection area, and transmits the human body detection signal S2 to the control part 5.

The control part 5 includes the microcomputer and the like, and includes: a human judgment part 51, a lighting control part 52, and a season judgment part 53.

The human judgment part 51 judges whether or not a human exists in the detection area on the basis of the human body detection signal S2 transmitted from the human-sensing device 4.

The lighting control part 52 generates a dimming signal S3 on the basis of: the judgment result of day and night due to the power generation amount detection signal S1 transmitted from the power generation amount detection part 3; and the judgment result of existence or non-existence of a human due to the human judgment part 51. The dimming signal S3 includes, for example, a PWM signal, and the lighting control part transmits the dimming signal S3 to the light source 6, thereby controlling the light source 6 to be lighted.

The season judgment part 53 judges the present season on the basis of the power generation amount detection signal S1 transmitted from the power generation amount detection part 3.

The light source 6 employs the battery 2 as a power source, and is lighted when electric power is supplied from the charged battery 2. In addition, the light source 6 includes a lighting circuit, and is lighted on, lighted off, and lighted to be dimmed on the basis of the dimming signal S3 transmitted from the lighting control part 52. Meanwhile, the light source 6 includes: a discharge lamp, an LED, an incandescent light bulb, or the like, and the types of components are not especially limited.

Detailed operations of the respective parts in the illumination device according to the present embodiment will be explained.

In Fig. 4, a graph of power generation amount of the solar generation part 1 is shown.

The season judgment part 53 judges the present season on the basis of a power generation amount indicated by the power generation amount detection signal S1. A threshold value A1 to the power generation amount is preliminarily set in the season judgment part 53. In addition, the season judgment part 53 includes a timer for counting time, judges that time when the power generation amount is equal to the threshold value A1 or more is day and that time when the power generation amount is less than the threshold value A1 is night, and calculates the daytime and the nighttime by counting each accumulated time. And, the season judgment part 53 judges the present season on the basis of a ratio between the daytime and nighttime in 24 hours.

Specifically, it is judged based on the variation of the 24-hour power generation amount of the solar generation part 1 whether it is the day when the sun rises or the night when the sun sets. In the summer, the day time is long, and the night time is short; however, in the winter, the daytime is short, and the nighttime is long. Accordingly, the season judgment part 53 can judge the present season on the basis of the ratio between the daytime and nighttime in 24 hours. For example, the season judgment part 53 judges: a case where a length of the daytime is less than 11 hours as the winter; a case where the length of the daytime is 11 hours or more and is less than 13 hours as the spring and autumn; and a case where the length of the daytime is 13 hours or more as the summer.

Next, the human judgment part 51 will be explained.

The human judgment part 51 judges whether or not a human exists in the detection area on the basis of the human detection signal S2 transmitted from the human-sensing device 4. In Fig. 5, a waveform chart of the human body detection signal S2 is shown.

The human-sensing device 4 detects an infrared ray emitted from the human in at time t1, and changes an output level of the human body detection signal S2 from a high level to a low level. In addition, the human-sensing device 4 does not detect the human at time t2, and changes the output of the detection signal S2 from a low level to a high level. That is, the human-sensing device 4 sets the output level of the human body detection signal S2 to the low level in the case where the human is detected, and sets the output level of the human body detection signal S2 to the high level in the case where the human is not detected. Meanwhile, a period where the human is detected (the period from time t1 to time t2) is T1 in the present embodiment.

The human judgment part 51 detects the output level of the human body detection signal S2 in every T20 (= 10ms). Then, as shown in Fig. 5, when the [Low] output level of the human body detection signal S2 is sequentially detected four times, the human judgment part 51 judges that the human exists in the detection area. A period from the first detection of the [Low] output level of the human body detection signal S2 until the fourth detection of the [Low] output level of the human body detection signal S2 is a judgment time T21. That is, in the case where the period T1 where the human-sensing device 4 detects the human is longer than the judgment time T21 at least, the human judgment part 51 judges that the human exists in the detection area. In this manner, the human judgment part 51 can detect the existence and non-existence of the human more certainly, and can prevent a false detection.

However, since the human-sensing device 4 according to the present embodiment includes the pyroelectric infrared ray detection element, the detection accuracy will deteriorate in the summer when a temperature difference between the human and a background of the human.

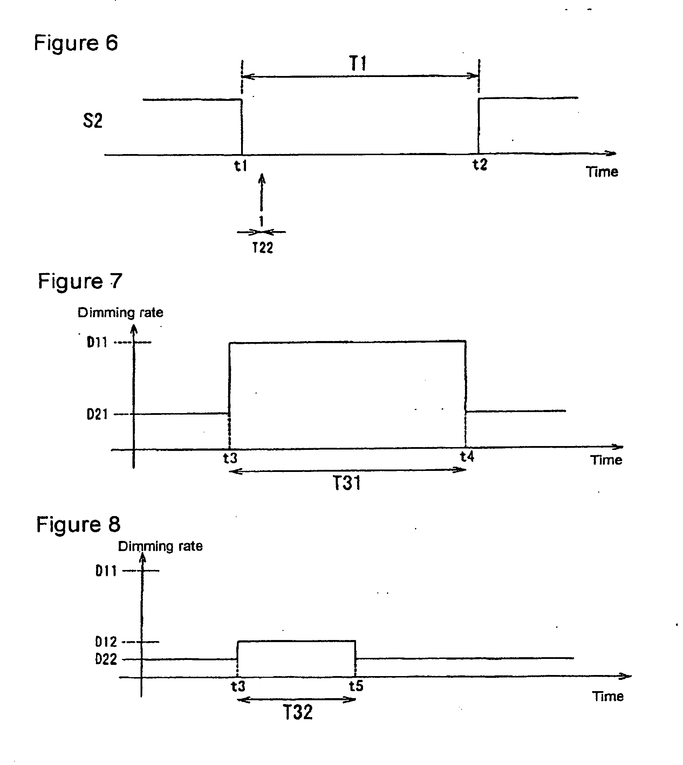

Meanwhile, in the case where the season judgment part 53 judges that it is the summer, when detecting the [Low] output level of the human body detection signal S2 even once as shown in Fig. 6, the human judgment part 51 judges that the human exists in the detection area. Specifically, in the case where the season is judged as the summer, the judgment time used by the human judgment part 51 is the judgment time T22 shorter than the judgment time T21. Meanwhile, the judgment time T22 is a period required by the human judgment part 51 to detect the output level of the human body detection signal S2. In this manner, even in the summer when the detection accuracy of the human-sensing device 4 as described above, even in the summer when the detection accuracy of the human-sensing device 4 deteriorates, the false judgment that judges the human does not exist despite the existence of the human can be prevented by shortening the judgment time to judge the existence and non-existence of the human.

Meanwhile, the human judgment part 51 according to the present embodiment detects the output level of the human body detection signal S2 in every interval of 10ms; however, the interval is not limited to 10ms. In addition, the human judgment part 51 judges that the human exists by detecting the [Low] output level of the human detection signal S2 sequentially four times in winter, autumn, and spring and once in summer; however, the number of detections is not limited to the above-mentioned number.

Next, the lighting control part 52 will be explained.

The lighting control part 52 controls the light source 6 to be lighted on the basis of: the judgment result of night and day due to the power generation amount detection signal S1, the judgment result of the existence and non-existence of the human due to the human judgment part 51, and the judgment result of the season due to the season judgment part 53.

The lighting control part 52 monitors the power generation amount indicated by the power generation amount detection signal S1; the lighting control part 52 lights off the light source 6 by judging that it is the daytime when the power generation amount is equal to the threshold A1 or more, and lights the light source 6 by judging that it is the nighttime when the power generation amount is less than the threshold A1. On this occasion, the lighting control part 52 judges the dimming rate of the light source 6 on the basis of the judgment result of the human judgment part 51. In the case where the human judgment part 51 judges the [non-existence] of the human, the lighting control part 52 lights the light source 6 at a second dimming rate D2. And, in the case where the human judgment part 51 judges the [existence] of the human, the lighting control part 52 lights the light source 6 at a first dimming rate D1 higher than the second dimming rate D2 during a preliminarily set lighting retention time T3. Meanwhile, after the lighting retention time T3 has passed, the lighting control part 52 judges the dimming rate of the light source again on the basis of the judgment result of the human judgment part 51. As described above, the lighting control part 52 according to the present embodiment lights the light source 6 in the nighttime, and raises the dimming rate of the light source 6 in the case where the human exists in the detection area.

In addition, the lighting control part 52 varies the first and second dimming rates and the lighting retention time on the basis of the judgment result of the season due to the season judgment part 53.

As shown in Fig. 7, in the case where the season judgment part 53 judges that it is the summer, the lighting control part 52 sets the first dimming rate D 1 to D11 (= 100%), sets the second dimming rate D2 to D21 (= 25%), sets the lighting retention time T3 to T31 (= 3 minutes)

When judging that it is the nighttime, the lighting control part 52 lights the light source 6. Before time t3, the human judgment part 51 judges the [non-existence] of the human, and the lighting control part 52 lights the light source 6 at the second dimming rate D21 (= 25%). Then, at time t3, when the human judgment part 51 judges the [existence] of the human, the lighting control part 52 lights the light source 6 at the first dimming rate D11 (= 100%) during the lighting retention time T31 (= 3 minutes). And, at and after time t4 when the lighting retention time T31 (= 3 minutes) has passed from time t3, the lighting control part 52 lights the light source 6 at the second dimming rate D21 (= 25%) again.

Although there is no problem in the above-mentioned setting, the summer has the long daytime, the electric power to charge the battery 2 is large, and accordingly the electric power to charge the battery 2 is smaller than that of the summer since the winter has the short daytime. In addition, since the winter has the long nighttime, it is required to light the light source 6 for a long time. For this reason, especially in the winter, there is a possibility that the electric power to light the light source 6 runs short. Accordingly, in the winter, fall, and spring, it is required to reduce the power consumption amount of the light source 6 in comparison with that of the summer.

Then, as shown in Fig. 8, in the case where the season judgment part 53 judges it is the winter, the lighting control part 52 sets the first dimming rate D1 to D12 (= 20%), sets the second dimming rate D2 to D22 (= 5%), and sets the lighting retention time T3 to T32 (= 1 minute).

When judging that it is the nighttime, the lighting control part 52 lights the light source 6. Before time t3, the human judgment part 51 judges the [non-existence] of the human, and the lighting control part 52 lights the light source 6 at the second dimming rate D22 (= 5%). Then, at time t3, when the human judgment part 51 judges the [existence] of the human, the lighting control part 52 lights the light source 6 at the first dimming rate D 12 (= 20%) during the lighting retention time T32 (= 1 minute). And, at and after time t5 when the lighting retention time T32 has passed from time t3, the lighting control part 52 lights the light source 6 at the second dimming rate D22 (= 5%) again.

In this manner, in the case where the season judgment part 53 judges that it is the winter, the lighting control part 52 sets the first and second dimming rates D1 and D2 to be lower than those of the summer, and shortens the lighting retention time T3. Thereby, in the winter, the first and second dimming rates D1 and D2 of the light source 6 are lower than those of the summer, additionally the lighting retention time T3 when the light source 6 is lighted at the first dimming rate D1 of the larger power consumption is shortened, and thus the power consumption amount of the light source 6 can be reduced. For this reason, the shortage of the electric power to light the light source 6 in the winter can be prevented.

Moreover, in the case where the season judgment part 53 judges that it is the autumn and spring, the lighting control part 52 sets the lighting retention time T3 to be 2 minutes between T31 (3 minutes) and T32 (1 minute). Additionally, in the case where the season judgment part 53 judges that it is the autumn and spring, the lighting control part 52 sets the first dimming rate D1 to be an intermediate value between D11(100%) and D12(20%), and sets the second dimming rate D2 to be an intermediate value between D21(25%) and D22(5%). Thereby, in the season of the short daytime that is a time from sunrise to sunset, the power consumption amount of the light source 6 can be reduced.

Additionally, in the summer when the temperature difference between the human and the background of the human becomes small, when the human judgment part 51 judges the existence and non-existence of the human again after the lighting retention time T3 has passed, there is a possibility that the human judgment part 51 judges the human does not exist despite the existence of the human. In this case, the dimming rate of the light source 6 shifts from the first dimming rate D11 to the second dimming rate D 12, and consequently the light source 6 is dimmed. However, in the case where the season judgment part 53 judges that it is the summer, the lighting control part 52 according to the present embodiment sets the lighting retention time T3 to be longer than that of the winter, and accordingly a state where the light source is dimmed despite the existence of the human can be reduced.

Moreover, in the summer, since the dimming rate of the light source 6 is 25% even in the case where the human judgment part 51 judges the [non-existence] of the human, the illumination intensity in an irradiation area of the light source 6 is secured, and accordingly safety can be improved.

Meanwhile, the concrete values of: the first and second dimming rates D1 and D2; and the lighting retention time T3 are not limited to the above-mentioned values. For example, the second dimming rate D2 in the summer is set to 100% (a fully-lighting state), and the lighting control part may be configured so as to fully light the light source 6 in spite of the judgment result of the human judgment part 51. Furthermore, the second dimming rate D2 in the winter is set to 0% (a lighting-off state), and the lighting control part may be configured so as to light off the light source 6 in the case where the human judgment part 51 judges the [non-existence] of the human.

Meanwhile, in the present embodiment, the same threshold A1 I set to the lighting control part 52 and the season judgment part 53; however, thresholds different from each other may be set to both parts.

Additionally, in the present embodiment, the lighting control part 52 varies both the first and second dimming rates D1 and D2 and the lighting retention time T3 on the basis of the judgment result of the season due to the season judgment part 53; however, the lighting control part 52 may vary only one of them.

Moreover, in the present embodiment, the season judgment part 53 has judged the season on the basis of the power generation amount of the solar generation part 1 indicated by the power generation amount detection signal S1 transmitted by the power generation amount detection part 3, and the lighting control part 52 has judged the daytime and the nighttime.

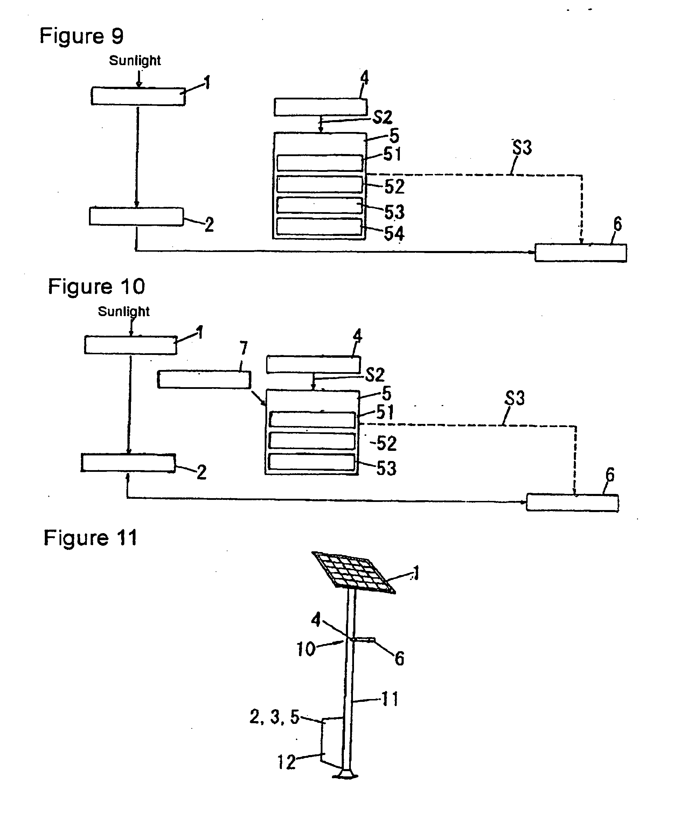

However, as shown in Fig. 9, a clock 54 having a time counting function may be provided to the control part 5 instead of the power generation amount detection part 3. The season judgment part 53 judges the season on the basis of a present date shown by the clock 54. In addition, the lighting control part 52 judges the daytime and nighttime on the basis of the present date and time shown by the clock 54.

Meanwhile, as shown in Fig. 10, an intensity sensor 7 may be provided instead of the power generation amount detection part 3. The intensity sensor 7 includes a photodiode and the like, and detects the illumination intensity around the illumination device (the outdoors). An illumination intensity threshold is preliminarily set to the season judgment part 53, a time of the illumination intensity threshold or more is judged as the daytime and a time of less than the illumination intensity threshold is judged as the nighttime on the basis of the detection result of the intensity sensor 7, the season is judged on the basis of the ratio between the respective accumulated times in a predetermined period. An illumination intensity threshold is set to the lighting control part 52, and when the intensity becomes less than the illumination intensity threshold, the lighting control part 52 judges that it is the nighttime on the basis of the detection result of the intensity sensor 7 and lights the light source 6.

Meanwhile, the human-sensing sensor 4 according to the present embodiment includes the pyroelectric infrared ray detection element; however, the human-sensing device 4 may include an ultrasonic sensor using a millimeter wave or an image sensor using a camera.

In the case where the human-sensing device 4 includes the ultrasonic sensor, the ultrasonic sensor transmits an ultrasonic signal such as the millimeter wave and receives the reflected wave. And, the human judgment part 5 judges the existence and non-existence of the human in the detection area on the basis of a time difference from the transmission of the ultrasonic signal until the reception of the reflected wave.

Additionally, in the case where the human-sensing device 4 includes the image sensor, the image sensor images the detection area. Then, the human judgment part 51 judges the existence and non-existence of the human on the detection area through an image processing of the imaging result.

In the case where the human-sensing device 4 includes the pyroelectric infrared ray detection element, the detection accuracy of the human is influenced by the season; however, the detection accuracy of the ultrasonic sensor and of the image sensor is not influenced by the season. Accordingly, when the human-sensing device 4 includes the ultrasonic sensor or the image sensor, there is no need to change the judgment time required for the human judgment part 51 to judge the existence and non-existence of the human on the basis of the season, and accordingly the control of the human judgment part 51 can be simplified.

The illumination device according to the present embodiment is, for example, used for the street light 10 shown in Fig. 11. The solar generation part 1 is provided to an upper portion of a pole 11, the battery part 2, the power generation amount detection part 3, and the control part 5 are provided in a chassis 12 provided to lower portion of the pole 11. In addition, the human-sensing device 4 and the light source 6 are provided to the pole 11. By configuring the street light 10 installed outside with use of the illumination device according to the present embodiment, as the daytime of the season judged by the season judgment part 53 becomes short, the first and second dimming rates are set to be lower, the lighting retention time is set to be lower, and thus the power consumption of the light source 6 in the winter can be reduced. In this manner, the shortage of the electric power to light the light source 6 in the winter can be prevented.

### [Description of Reference Numerals]

- 1: Solar generation part
- 2: Battery
- 3: Power generation amount detection part
- 4: Human-sensing device
- 5: Control part
- 6: Light source
- 51: Human judgment part
- 52: Lighting control part
- 53: Season judgment part

## Claims

1. An illumination device comprising:
a solar generation part (1) for generating electric power by receiving sunlight;
a battery (2) for storing the electric power generated by the solar generation part (1);
a light source (6) for being lighted with use of the battery (2) as a power source;
a human-sensing device (4) for detecting a human;
a human judgment part (51) for judging existence and non-existence of the human on the basis of the detection result of the human-sensing device (4); and
a lighting control part (52) for lighting the light source (6) at a predetermined dimming value (D1) during a predetermined lighting retention time (T3) in the case where the human judgment part (51) judges the existence of the human, **characterized in that** it further comprises
a season judgment part (53) for judging a present season is provided and that the lighting control part (52) reduces a dimming value amount of the light source (6) in the season of a short daytime to be smaller than a dimming value amount of the light source (6) in the season of a long daytime judged by the season judgment part (53) on the basis of the season judged by the season judgment part (53).

2. The illumination device according to claim 1, wherein
the lighting control part (52) shortens the lighting retention time (T32) in the season of a short daytime to be shorter than the lighting retention time (T31) in the season of a long daytime judged by the season judgment part (53) on the basis of the season judged by the season judgment part (53).

3. The illumination device according to claim 1 or 2, wherein
the lighting control part (52) reduces the dimming rate (D12, D22) in the season of a short daytime to be shorter than the dimming rate (D 11, D21) in the season of a long daytime judged by the season judgment part (53) on the basis of the season judged by the season judgment part (53).

4. The illumination device according to one of claims 1 to 3, wherein
the human-sensing device (4) includes a pyroelectric infrared ray detection element, and
the human judgment part (51) judges that the human exists in the case where the human-sensing device (4) detects the human during a predetermined judgment time (T2), wherein the human judgment part (51) detects the output level of a human body detection signal (S2) periodically (T20), and shortens the judgment time (T22) in the season of the long daytime to be shorter than the judgment time (T21) in the season of the short daytime judged by the season judgment part (53) on the basis of the season judged by the season judgment part (53).

5. The illumination device according to any one of claims 1 to 4, comprising:
a power generation amount detection part (3) for detecting a power generation amount due to the solar generation part, wherein
the season judgment part (53) judges the season on the basis of a detection result of the power generation amount detection part (3).

6. The illumination device according to any one of claims 1 to 4, comprising:
a clock part having a time counting function, wherein
the season judgment part (53) judges the season on the basis of a time counting result of the clock part.

7. The illumination device according to any one of claims 1 to 4, comprising:
an intensity sensor (7) for detecting an illumination intensity of the outdoors, wherein
the season judgment part (53) counts an accumulated time when an illumination intensity detected by the intensity sensor (7) in a predetermined period is a predetermined threshold (A1) or more, and judges the season on the basis of the accumulated time.

## Patentansprüche

1. Eine Beleuchtungsvorrichtung, die aufweist:
Einen solaren Generatorteil (1) zur Erzeugung elektrischer Energie durch Empfang von Sonnenlicht;
eine Batterie (2) zum Speichern der von dem solaren Generatorteil (1) erzeugten elektrischen Energie;
eine Lichtquelle (6), die unter Verwendung der Batterie (2) als Energiequelle zum Leuchten gebracht werden kann;
eine Menschen-Fühlvorrichtung (4) zum Erfassen eines Menschen;
einen Menschen-Bestimmungsteil (51) zur Bestimmung des Vorhandenseins und Nichtvorhandenseins des Menschen auf der Grundlage des Erfassungsergebnisses der Menschen-Fühlvorrichtung (4); und
einen Beleuchtungssteuerteil (52), um die Lichtquelle (6) bei einem vorbestimmten Abschwächwert (D1) während einer vorbestimmten Beleuchtungsaufrechterhaltungszeit (T3) in dem Fall leuchten zu lassen, dass der Menschen-Bestimmungsteil (51) das Vorhandensein des Menschen bestätigt, **dadurch gekennzeichnet, dass** sie außerdem aufweist,
dass ein Jahreszeiten-Bestimmungsteil (53) zur Bestimmung einer gegenwärtigen Jahreszeit vorgesehen ist und dass der Beleuchtungssteuerteil (52), jeweils bestimmt durch das Jahreszeiten-Bestimmungsteil (53) auf der Grundlage der von dem jahreszeiten-Bestimmungsteil (53) bestimmten Jahreszeit, den Betrag eines Abschwächwertes der Lichtquelle (6) so verringert, dass dieser in der Jahreszeit mit einer kurzen Tageszeit kleiner ist als der Betrag des Abschwächwertes der Lichtquelle (6) in der Jahreszeit mit einer langen Tageszeit.

2. Beleuchtungsvorrichtung nach Anspruch 1, bei der der Beleuchtungssteuerteil (52), jeweils bestimmt durch den Jahreszeiten-Bestimmungsteil (53) auf der Basis der von dem Jahreszeitenbestimmungsteil (53) bestimmten Jahreszeit, die Beleuchtungsaufrechterhaltungszeit (T32) in der Jahreszeit mit einer kurzen Tageszeit so verkürzt, dass sie kürzer ist als die Beleuchtungsaufrechterhaltungszeit (T31) in der Jahreszeit mit einer langen Tageszeit.

3. Beleuchtungsvorrichtung nach Anspruch 1 oder 2, bei der der Beleuchtungssteuerteil (52), jeweils bestimmt durch den Jahreszeiten-Bestimmungsteil (53) auf der Basis der von dem Jahreszeitenbestimmungsteil (53) bestimmten Jahreszeit, die Abschwächsrate (D12,D22) in der Jahreszeit mit einer kurzen Tageszeit so verkürzt, dass sie kürzer ist als die Abschwächungsrate (D11,D21) in der Jahreszeit mit einer langen Tageszeit.

4. Beleuchtungsvorrichtung nach einem der Ansprüche 1 bis 3, bei der die Menschen-Fühlvorrichtung (4) ein pyroelektrisches Infrarot-Fühlerelement aufweist, und der Menschen-Bestimmungsteil (51) bestimmt, dass der Mensch in dem Fall vorhanden ist, dass die Menschen-Fühlvorrichtung (4) den Menschen während einer vorbestimmten Bestimmungszeit (T2) erfasst, wobei das Menschen-Bestimmungsteil (51) periodisch den Ausgangslevel eines Erfassungssignals (S2) für einen menschlichen Körper erfasst und, jeweils bestimmt durch den Jahreszeiten-Bestimmungsteil (53) auf der Basis der von dem Jahreszeitenbestimmungsteil (53) bestimmten Jahreszeit, die Bestimmungszeit (T22) in der Jahreszeit mit der langen Tageszeit so verkürzt, dass sie kürzer ist als die Bestimmungszeit (T21) in der Jahreszeit mit der kurzen Tageszeit.

5. Beleuchtungsvorrichtung nach einem der Ansprüche 1 bis 4, die aufweist:
Einen die Menge der Energieerzeugung erfassendes Teil (3) zur Erfassung einer von dem solaren Generatorteil herrührenden Energieerzeugungsmenge, wobei
das Jahreszeiten-Bestimmungssteil (53) die Jahreszeit auf der Grundlage eines Erfassungsergebnisses des Energieerzeugungsmenge-Erfassungsteils (3) der Menge der Energieerzeugung bestimmt.

6. Beleuchtungsvorrichtung nach einem der Ansprüche 1 bis 4, die aufweist:
Einen Taktteil, das eine Zeit-Zählfunktion aufweist, wobei
das Jahreszeiten-Bestimmungsteil (53) die jeweilige Jahreszeit auf der Grundlage eines Zeit-Zählergebnisses des Taktteils bestimmt.

7. Beleuchtungsvorrichtung nach einem der Ansprüche 1 bis 4, die aufweist:
Einen Intensitätsfühler (7) zum Erfassen einer Beleuchtungsintensität des Außenbereiches, wobei
der Jahreszeiten-Bestimmungsteil (53) eine akkumulierte Zeit zählt, wenn eine von dem Intensitätsfühler (7) während einer vorbestimmten Zeitspanne erfasste Beleuchtungsintensität gleich einem vorbestimmten Grenzwert (A1) ist oder darüber liegt, und die jeweilige Jahreszeit auf der Grundlage der akkumulierten Zeit bestimmt.

## Revendications

1. Dispositif d'éclairage comportant :
un moyen de production d'électricité d'origine solaire (1) pour produire de l'électricité en recevant de la lumière du soleil ;
une batterie (2) pour stocker l'électricité générée par le moyen de production d'électricité d'origine solaire (1) ;
une source de lumière (6) destinée à être allumée à l'aide de la batterie (2) qui sert de source d'électricité ;
un dispositif de détection (4) de présence humaine pour détecter une présence humaine ;
un moyen d'estimation (51) de présence humaine pour estimer l'existence et la non-existence d'une présence humaine d'après le résultat de la détection par le dispositif de détection (4) de présence humaine ; et
un moyen de commande d'allumage (52) pour allumer la source de lumière (6) à une valeur de gradation prédéterminée (D1) pendant un temps prédéterminé (T3) de maintien d'allumage dans le cas où le moyen d'estimation (51) de présence humaine estime qu'existe une présence humaine, **caractérisé en ce qu'**il comporte en outre :
un moyen d'estimation (53) de saison présent pour estimer la saison en cours et **en ce que** le moyen de commande d'allumage (52) réduit une valeur de gradation de la source de lumière (6) pendant la saison à courte durée du jour pour qu'elle soit inférieure à une valeur de gradation de la source de lumière (6) pendant la saison à longue durée du jour estimée par le moyen d'estimation (53) de la saison en fonction de la saison estimée par le moyen d'estimation (53) de saison.

2. Dispositif d'éclairage selon la revendication 1, dans lequel
le moyen de commande d'allumage (52) réduit le temps de maintien d'allumage (T32) pendant la saison à courte durée du jour pour qu'il soit plus court que le temps de maintien d'allumage (T31) pendant la saison à longue durée du jour estimée par le moyen d'estimation (53) de saison en fonction de la saison estimée par le moyen d'estimation (53) de saison.

3. Dispositif d'éclairage selon la revendication 1 ou 2, dans lequel
le moyen de commande d'allumage (52) réduit la valeur de gradation (D12, D22) pendant la saison à courte durée du jour pour qu'elle soit inférieure à la valeur de gradation (D11, D21) pendant la saison à longue durée du jour estimée par le moyen d'estimation de saison (53) en fonction de la saison estimée par le moyen d'estimation de saison (53).

4. Dispositif d'éclairage selon l'une quelconque des revendications 1 à 3, dans lequel le dispositif de détection (4) de présence humaine comprend un élément de détection infrarouge pyroélectrique, et
le moyen d'estimation (51) de présence humaine estime qu'il existe une présence humaine dans le cas où le dispositif de détection (4) de présence humaine détecte la présence humaine durant un temps d'estimation prédéterminé (T2), le moyen d'estimation (51) de présence humaine détectant périodiquement le niveau de sortie d'un signal de détection (S2) de présence humaine et réduisant le temps d'estimation (T22) pendant la saison à longue durée du jour pour qu'il soit plus court que le temps d'estimation (T21) pendant la saison à courte durée du jour estimée par le moyen d'estimation (53) de saison en fonction de la saison estimée par le moyen d'estimation (53) de saison.

5. Dispositif d'éclairage selon l'une quelconque des revendications 1 à 4, comportant :
un moyen de détection (3) de quantité d'électricité produite pour détecter une quantité d'électricité produite par le moyen de production d'électricité d'origine solaire,
le moyen d'estimation (53) de saison estimant la saison d'après un résultat de détection fourni par le moyen de détection (3) de quantité d'électricité produite.

6. Dispositif d'éclairage selon l'une quelconque des revendications 1 à 4, comportant :
un moyen formant horloge à fonction de comptage de temps,
le moyen d'estimation (53) de saison estimant la saison d'après un résultat de comptage de temps fourni par le moyen formant horloge.

7. Dispositif d'éclairage selon l'une quelconque des revendications 1 à 4, comportant :
un détecteur d'intensité (7) pour détecter une intensité d'éclairage de l'environnement extérieur,
le moyen d'estimation (53) de saison comptant un temps cumulé lorsqu'une intensité d'éclairage détectée par le détecteur d'intensité (7) au cours d'un laps de temps prédéterminé est égale ou supérieure à un seuil prédéterminé (A1) et estimant la saison d'après le temps cumulé.
